# EUROPEAN PATENT SPECIFICATION

(11) **EP 3 072 807 B1**
(45) Date of publication and mention of the grant of the patent: **08.07.2020**
(21) Application number: 15160813.0
(22) Date of filing: 25.03.2015
(51) Int. Cl.: B63H 21/30, B63H 5/125

(54) **PROPULSION UNIT**
ANTRIEBSEINHEIT
UNITÉ DE PROPULSION

(43) Date of publication of application: 28.09.2016
(73) Proprietor: ABB Schweiz AG, 5400 Baden (CH)
(72) Inventor: Kokkila, Kimmo, FI-00980 Helsinki (FI); Säkkinen, Petri, FI-00980 Helsinki (FI); Hakala, Jani, FI-00980 Helsinki (FI)
(74) Representative: Kinnunen, Kari Tapio

(56) References cited:
- EP-A1- 0 167 503
- WO-A1-84/03478
- JP-A- S59 220 487
- US-A- 4 036 163
- US-A1- 2012 058 694
- US-B1- 6 497 594

## Description

### FIELD

The present invention relates to a propulsion unit.

### BACKGROUND

The propulsion unit that is used in an azimuthal propulsion system is connected to the hull of the ship via steering gear. When the propulsion unit is turned around its vertical axis and the direction of the propulsion force will be deviated from the longitudinal axis of the ship and the propulsion unit steers the ship.

The azimuthal propulsion unit may be mechanical or electrical. If the azimuthal propulsion unit is mechanical, the driving unit normally locates inside the hull of the ship. The driving unit may be an electric motor or a combustion motor like diesel. The propulsion force is transmitted via mechanical gears and shafts to the propeller. If the azimuthal propulsion unit is electrical, the propulsion power is lead to the propulsion unit via electric cables or via bus bars to the electric motor that locates inside the propulsion unit.

The azimuthal propulsion unit is attached to the hull of the ship under the water-line of the ship. The upper part of the propulsion unit is attached to the hull watertight so that the connection allows the turning of the propulsion unit around vertical axis.

Both the mechanical and the electrical propulsion unit consists of many components that require maintenance and service actions. Some of the actions even necessitates either docking or removal of the propulsion unit in order to perform the needed operations.

The docking of the whole ship is time consuming and expensive operation and there are quite a few docks available. In case of semisubmersible rig type drilling platform docking is practically impossible. Therefore the removal and the installing of the propulsion unit under water has been a useful course of action. There are several solutions to perform the underwater installations of the propulsion unit.

Patent document US4036163A discloses an apparatus for mounting and dismounting a submerged propeller unit to and from the hull of a ship from the outside thereof. The removable, watertight housing of the propulsion is secured over the flanged opening in the hull, whereby the propeller unit is to be received to the opening. The propeller unit is positioned in the water outside the body and raised to bring a flange thereon in registry with the flange around the opening in the hull, and the two flanges are secured together in watertight relation by fastenings put in place by tools located within the watertight housing that are operable from a location outside the housing. The propeller unit is adapted to be raised into position by cables detachably secured thereto which extend through watertight passages formed in the hull. This apparatus requires a large dome to be stored inside the hull of the ship and even in the neighbourhood of the propulsion unit. Further special equipment is needed for tightening the bolts and pressurizing the dome as well as for transferring or lifting the dome. The space inside the hull is limited and valuable.

### SUMMARY

An object of the present invention is to provide an apparatus and a method so as to alleviate the above disadvantages. The object of the invention is achieved with an apparatus and a method, which are defined in the independent claims. Some embodiments are disclosed in the dependent claims.

An apparatus for installing a propulsion unit to a hull of a ship, where-in the propulsion unit comprises an upper part of the propulsion unit attachable to the hull of the ship and a lower part of the propulsion unit where to a propeller shaft is rotatably supported, and the upper part of the propulsion unit having flanges to attach the flanges tightly to the hull, and wherein there is an aperture in bottom of hull where to the propulsion unit is to be installed. The apparatus comprises a frame plate with openings attached to the hull to cover the aperture, a plurality of watertight covers covering openings in the frame plate and a plurality of watertight covers covering the top of the upper part of the propulsion unit, wherein the apparatus comprises a removable hull-side cover covering at least one opening in the frame plate under it, and at least one removable cover in the propulsion unit side covering one opening under it and facing the opening in the frame, and wherein the re-movable covers are bolted from the hull-side.

An apparatus for installing a propulsion unit to a hull of a ship, wherein the propulsion unit comprises an upper part of the propulsion unit attachable to the hull of the ship and a lower part of the propulsion unit where to a propeller shaft is rotatably supported, and the upper part of the propulsion unit having flanges to attach the flanges tightly to the hull, and wherein there is an aperture in bottom of hull where to the propulsion unit is to be installed. The apparatus comprises a plurality of watertight covers covering openings in the bottom of hull and a plurality of watertight covers covering the top of the upper part of the propulsion unit, wherein the apparatus comprises a hull-side cover covering at least one first opening under it, and at least one removable propulsion unit side cover covering a second opening under it and facing the first opening, and wherein the removable cover are bolted from the hull-side.

A method for installing a propulsion unit to a hull of a ship, wherein the propulsion unit comprises an upper part of the propulsion unit attachable to the hull of the ship and a lower part of the propulsion unit where to a propeller shaft is rotatably supported, and the upper part of the propulsion unit having flanges to attach the flanges tightly to the hull, and wherein there is an aperture in bottom of hull where to the propulsion unit is to be installed. The method comprises a step of attaching a frame plate with openings to the hull to cover the aperture ,steps of installing a plurality of water-tight covers covering openings in the frame plate and of in-stalling a plurality of watertight covers covering an opening on the top of the upper part of the propulsion unit, wherein at least one removable hull-side cover covering at least one opening in the frame is faced to at least one removable propulsion unit side cover covering the opening under it, and wherein the removable covers are bolted from the hull-side.

Big domes and lifting heavy parts inside thruster room are not needed at all in invented solution. Water tight small double flanges are used to prevent sea water ingress. In addition, steering gear frame structure is used as a watertight element in propulsion unit side. Watertight blanking flange is used as a basement of the slip ring unit. Removal of slip ring unit is not needed during propulsion unit replacement procedure. Installation and storage don't require any extra space in thruster room, normal maintenance space is sufficient for storage of relatively small watertight double flanges. Installation time is reduced significantly.

In addition initial cost is reduced due to smaller amount of material. Installation time and material cost is reduced

Minimal space is needed in thruster room. No lifting of heavy components is needed leading to improved work safety.

### DRAWINGS

In the following, the invention will be described in greater detail by means of some embodiments with reference to the accompanying drawings, in which
Figure 1 shows a propulsion unit;
Figure 2 shows a hull-side portion of an apparatus according to the invention;
Figure 3 shows an upper portion of a propulsion unit side portion of an apparatus according to the invention;
Figure 4 shows lifting and guiding the propulsion unit portion;
Figure 5 shows the apparatus according to the invention ready for bolting;
Figure 6 shows the apparatus according to the invention ready for installing the steering motor;

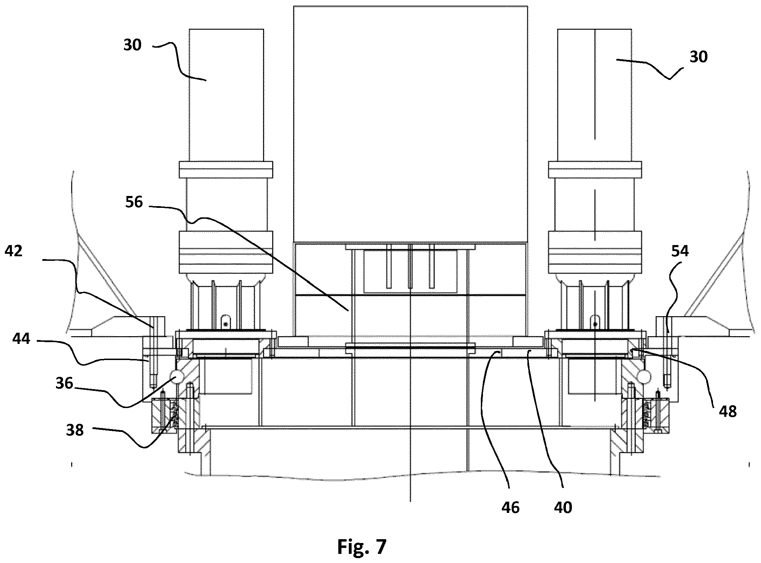

Figure 7 shows the installed apparatus according to the invention;
Figure 8 shows an embodiment of a method when installing or dismounting the propulsion unit;
Figure 9a shows a side view of an embodiment of installed propulsion unit; and
Figure 9b shows an axial view of an embodiment of installed propulsion unit.

### DETAILED DESCRIPTION

The embodiments relate to some exemplary implementations of the invention. The presentation shows the installation of the propulsion unit phase by phase and only shows the required parts in each phase. Each part is identified with the same reference number in each Figure.

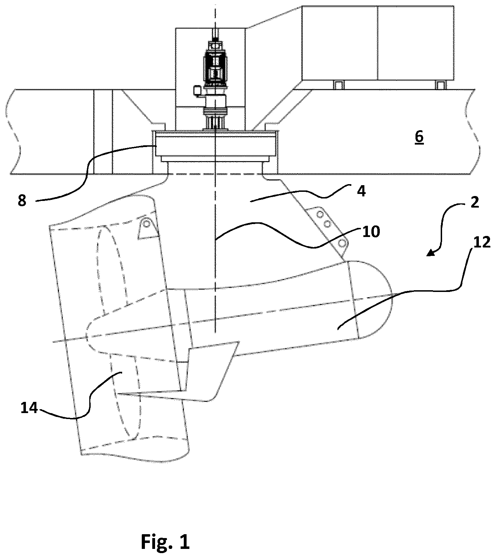

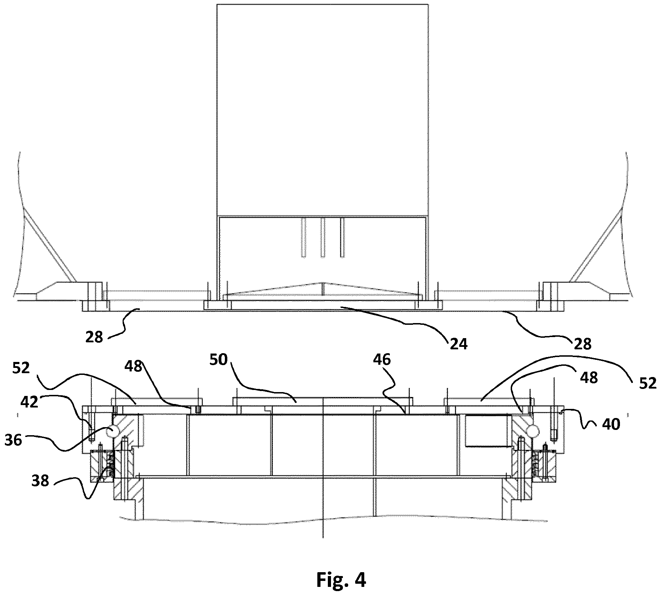

Figure 1 shows a side view of an exemplary propulsion unit, which is installed utilizing the teaching of the invention. The propulsion unit 2 comprises an upper part 4, which is attached to the hull 6 of a ship with a steering module 8. The steering module 8 allows the propulsion unit 2 to turn around the vertical axis 10 of the propulsion unit 2. The steering module 8 comprises steering motors, which turn the propulsion unit 2 via gears, bearings to support it to the hull 6 and water-tight seals as detailed in Figures 4 to 6, for example. The propulsion unit 2 further comprises a lower part 12 attached to the lowest part of the upper part 4. The lower part comprises an outer frame and an electric motor inside. The propeller 14 is attached to the shaft of the motor and protrudes from one end of the lower part 12. The propulsion unit may be realized variously well-known in the art; the propeller may be in the other end of the lower part, there may nozzle around the propeller, the electric motor may be an asynchronous or a synchronous motor, for example.

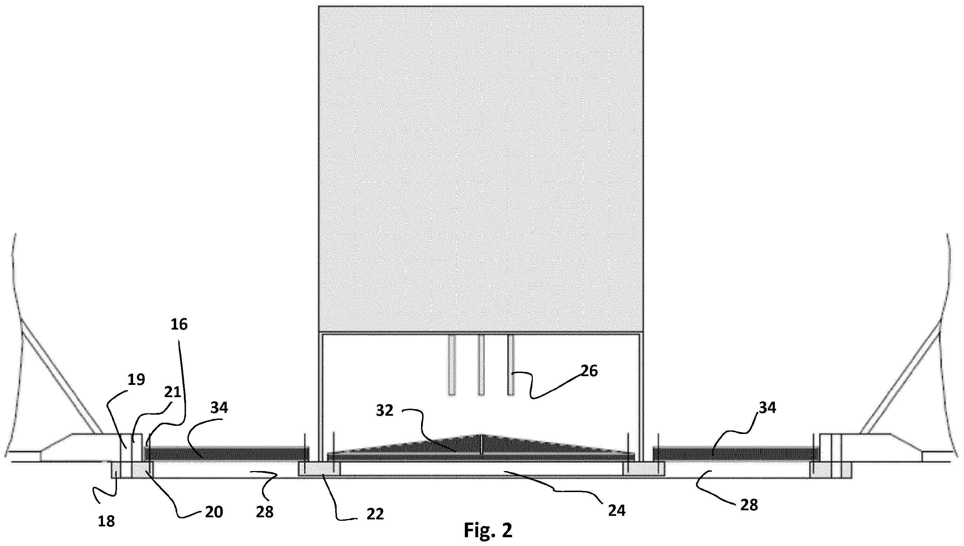

In the Figures 2 to 5 an exemplary embodiment of the invention is described phase by phase. The Figures 2 to 6 show selected parts of the whole structure in each installation phase. An aperture 16 has been formed in the bottom of the hull 6. The aperture 16 is covered by a frame plate 18, which forms the upper part of the steering module 8.The frame plate 18 is bolted or welded to the hull 6 and it locates under the hull 6. If the frame plate 18 is bolted, short bolts with gaskets are used to avoid long protruding from the plate plane and to tighten and seal the joint. The plate 18 is preferably round and it has a plurality of openings. In the middle of the frame plate 18 there is a first opening 24 for introducing the electric cables 26 and pipes (not shown). On the outer section of the frame plate 18 there are a plurality of second openings 28 for installing steering motor assemblies 30. For one propulsion unit there is at least one steering motor and one second opening 28. In this embodiment there are two steering motors and two second openings 28, which are positioned on the opposite sides of the frame plate 18. While in the Figure 2 two opposite second openings is shown, in practice there might be altogether four steering motors and four second openings.

The first opening 24 is covered by a first watertight cover 32, which is from the inside of the hull fixed with bolts to the frame plate 18. The second openings 28 are covered by second watertight covers 34, which are from the inside of the hull fixed with bolts to the frame plate 18. From the seaside of the hull 2 there are three openings visible, the first opening 24 blanked with the first watertight cover 32 and two second openings 28 blanked with two pieces of the second watertight covers 34. Further, the underside of frame plate and holes 21 of the bolts 19 are covered with blanking ring or blanking plate (not shown) to prevent marine fouling before propulsion unit installation. Blanking plate or blanking ring is removed just prior to propulsion unit installation. The covers 32 and 34 are installed to hull-side in order to make openings water tight and are attached to the hull 6 via frame plate 18.

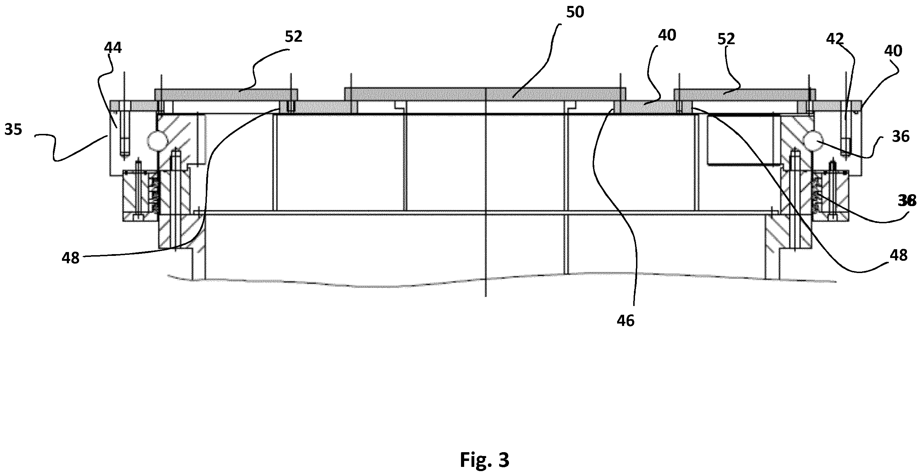

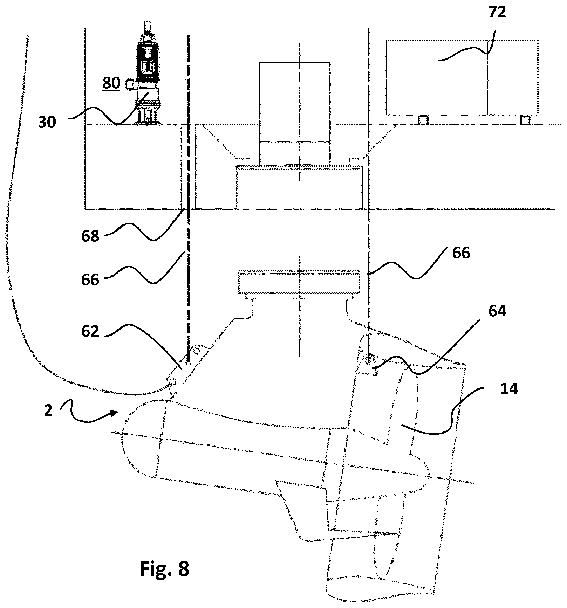

The Figure 3 shows an upper portion of a propulsion unit side portion of an apparatus according to an embodiment of the invention. The propulsion unit 2 is prefabricated outside the ship and it will be transported under the hull and lifted into the right position using 3-point lifting with guide tubes and wires, for example as shown in the Figure 8. The propulsion unit 2 also includes a lower part 35 of the steering module, which is fixed to the upper part 4 of the propulsion unit. As well-known in the art there is slewing bearings 36 and watertight seals 38 surrounding the lower part 35 of the steering module and the upper part 4 of the propulsion unit 2, respectively. The prefabricated propulsion unit is covered by a flange plate 40, which is fixed by bolts 42 to the outer ring 44 of the slewing bearing. The flange plate 40 comprises a third opening 46 in the middle part of the flange plate 40 and fourth openings 48 on the outer ring side of the flange plate 40.

The third opening 46 is covered by a third watertight cover 50, which is bolted water tightly to the flange plate 40. The fourth openings 48 are covered by a fourth watertight covers 52, which are bolted water tightly to the flange plate 40.

The third opening 46 has the same horizontal location as the first opening 24, when the propulsion unit 2 has been installed to the hull 6. In other words if the third and first openings have round periphery, their midpoints coincide. Similarly the fourth openings 48 has the same horizontal location as the second openings 28, when the propulsion unit 2 has been installed to the hull 6. In other words as the fourth and second openings have round periphery, their midpoints coincide.

The third opening for electric cables, pipes and cooling air channels and the fourth openings for steering motor assemblies 30 are blanked water tightly by blanking flanges, i.e. by the third and the fourth watertight covers. Dummy pinion 39 with one teeth is integrated to one blanking plate of steering motor assemblies 30 flange in order to lock the gear ring. The grease channels (not shown) of the slewing bearing are plugged with watertight plugs.

The diameter of the first opening 24 is slightly larger than the diameter of the third cover 50. Likewise the diameter of the second openings 28 are slightly larger than the diameter of the fourth covers 52. The clearance range between the opening and the cover introduced to the opening is quite small as the guiding is controlled by the lifting and guiding elements. When the propulsion unit 2 has been located and lifted (Figure 4 and Figure 8) towards the aperture 16 in the hull 6 of the ship, the propulsion unit 2 is guided so that the third cover 50 is led into the first opening 24 and the fourth watertight covers 52 are led into the second openings 28.

The Figure 8 shows the method for installing and dismounting the propulsion unit 2. The propulsion unit 2 comprises one lifting lug 62 on the front side of the propulsion unit and two lifting lugs 64 on the aft side of the propulsion unit 2. As well known in the art the propulsion unit 2 is lifted with three lifting wires 66 using the hoisting means (not shown) located inside the hull 6. In order to position the propulsion unit the lifting wires 66 are guided by the tubes 68 that go through the structure of the hull. During the lifting of the propulsion unit 2, the steering motor 30 is positioned so that there is enough room for the lifting wires and for the operating of the hoisting means. Likewise the cooling devices 72 are disconnected from the slip sing unit.

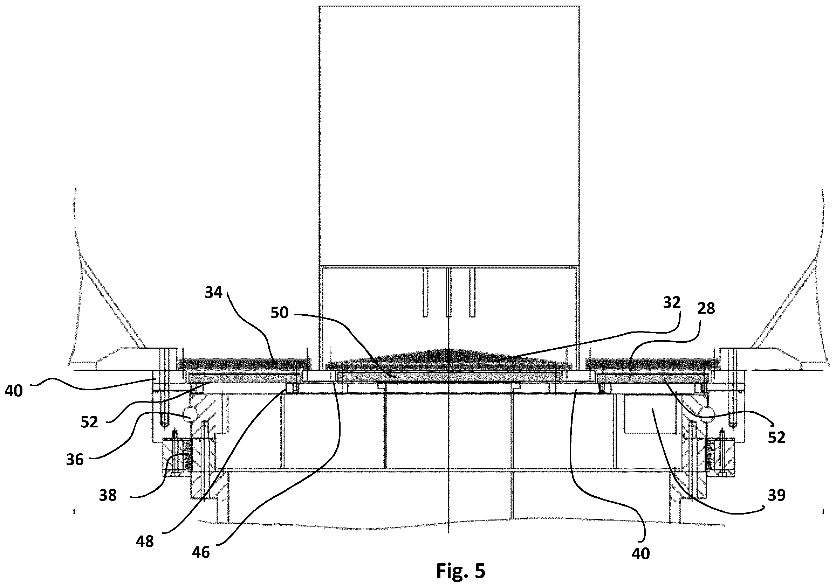

The third and fourth watertight covers are propulsion unit -side water-tight covers. The watertight plugs in the holes 21 and holes 42 are replaced with connection bolts 54, which will fix the propulsion unit 2 to the hull 6. Accordingly, watertight plugs or short connection bolts of upper part of steering module are replaced with connection bolts 54. As long as the propulsion unit 2 has been installed and fixed to the hull 6, the first and second watertight covers bolted to the frame plate as well as the third and the fourth watertight covers bolted to the flange plate 40 are still in place as shown in Figure 5.

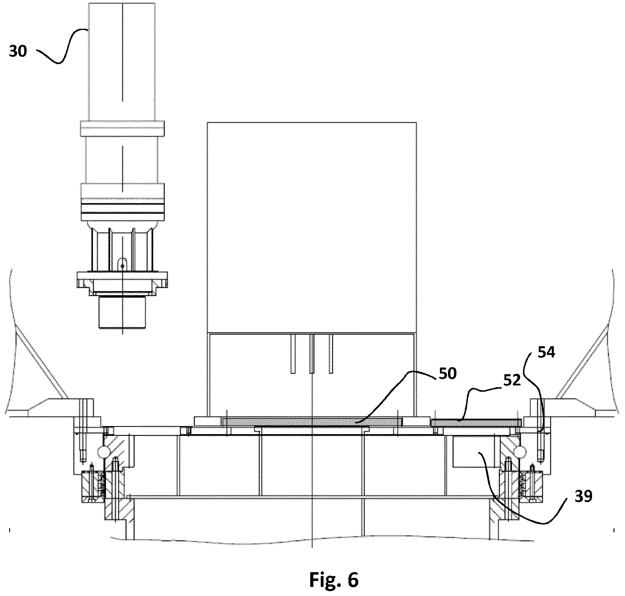

The next phase of installing the propulsion unit to the hull of the ship is to dismount the watertight covers covering all the openings. First the blanking plates are removed from the upper part of the steering module. After this one of the fourth covers is removed thus revealing the gearing in the upper part of the propulsion unit. The first steering motor and planet wheel is mounted to the upper part of the propulsion unit whereas the other of the fourth covers having dummy pinion 39 is still in bolted to the upper part of the propulsion unit to prevent rotation of propulsion unit 2 (Figure 6).

After the first steering motor has been installed the last cover, i.e. the other fourth cover is detached and removed, and the second steering motor will be installed. If there are more than two steering motors with gear, the latest steering motor to be installed is the one with dummy pinion 39 and its blank plate will removed after the other steering motors have been installed.

When the second cover covering the midpoint of the propulsion unit has been removed the slip ring unit is coupled to the propulsion unit electric cables. In addition pipe connections are made between upper and lower parts. Further the torque tube 56 is installed and fixed between the slip ring unit and the lower part, i.e. propulsion unit 2 in in order to fix the slip ring unit to rotate with the propulsion unit.

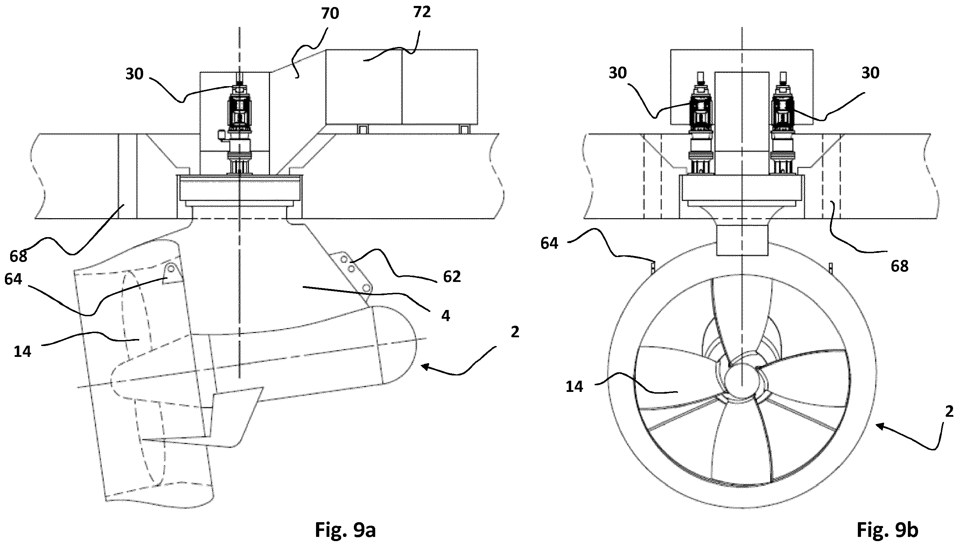

The Figure 9a shows a cross-section side view of the propulsion unit when installed. The steering motor assemblies 30 have been transferred after installation procedure to their operating locations. The cooling devices 72 are connected to the slip ring unit by the cooling channel 70. During the installation procedure the steering motor assemblies 30 and the cooling channel 70 are stored in the nearby space 80 where the covers are stored.

The Figure 9b shows a cross-section axial view of the propulsion unit when installed.

The first to fourth watertight covers, which are named as blanking plates, are made of steel or other strong and resistant material having basically the characteristics as material used in the hull of the ship. The thickness of the covers are rated for the circumstances prevailing under the sea level in the depth of the bottom of the hull. The thickness of the covers also is dimensioned so that the covers located one upon the other during installation have sufficient space. Thus the thickness of the removable third cover is smaller than the thickness of the frame plate as the third cover is introduced into the opening in the frame plate 18.

The watertight covers need not be totally even through their total cross section have to fulfil the rated requirements described in the paragraph above. Thus the covers may have strengthening projections or even slight curvature. Preferably, the side of the cover facing to the seawater is even. The circumferences of the covers have a plurality of holes for the fixing bolts.

The propulsion unit 2 shown in Figure 1 is an electric propulsion unit, where the motor driving the propeller locates in the lower part of the propulsion unit. The propulsion unit also may be a mechanical thruster, whereby the driving motor is inside the hull and the power is transmitted via shafts and gears to propeller. In case of mechanical thruster the slip ring unit is replaced with upper gear or vertical shaft of electric motor and electric propulsion unit is replaced with mechanical thruster. In this case torque tube is not needed but vertical shaft of mechanical thruster is connected to vertical shaft of upper gear or vertical shaft of electric motor.

In a so-called L-drive the propulsion unit comprises a vertical shaft rotated by motor above it and a first bevel gear and horizontal shaft locating in the lower part of the propulsion unit. The motor may locate in the upper part of the propulsion unit or above the propulsion unit inside the hull of the ship.

In a so-called Z-drive the propulsion unit comprises a vertical shaft rotated by a second bevel gear above it and a first bevel gear and horizontal shaft locating in the lower part of the propulsion unit. The second bevel gear is connected to the shaft of a motor locating inside the hull of the ship.

When installing the propulsion unit with mechanical thruster the apparatus comprises an equipment to connect the transmission element to attach a vertical shaft of the propulsion unit to a vertical shaft above the propulsion unit.

It will be obvious to a person skilled in the art that, as the technology advances, the inventive concept can be implemented in various ways. The invention and its embodiments are not limited to the examples described above but may vary within the scope of the claims.

## Claims

1. An apparatus for installing a propulsion unit (2) to a hull (6) of a ship, comprising a hull of a ship, and a propulsion unit, wherein the propulsion unit comprises an upper part (4) attachable to the hull (6) of the ship and a lower part (12) where to a propeller (14) shaft is rotatably supported, and the upper part (4) of the propulsion unit having a flange plate (40) attached to the top of the upper part of the propulsion unit to attach the propulsion unit tightly to the hull (6), the flange plate comprising a plurality of openings, and wherein the propulsion unit (2) is installable to an aperture (16) in bottom of hull, **characterized in that** the apparatus comprises a frame plate (18) with openings (24,28) attachable to the hull to cover the aperture (16) in the hull, a plurality of removable and watertight first and second covers (32,34) covering first and second openings (24,28) under it in the frame plate (18) and a plurality of removable and watertight third and fourth covers (50,52) covering third and fourth openings under it in the flange plate in the top of the upper part of the propulsion unit (2), the third and fourth removable covers facing and being receivable by the openings (24) in the frame plate (18) during installation of the propulsion unit, and wherein the removable covers are boltable from the hull-side.

2. An apparatus according to claim 1, **characterized in that** the first cover (32), the second covers (34), the third cover (50) and the fourth covers (52) are removable and transportable to a space (80) inside the hull.

3. An apparatus according to claim 1 or 2, **characterized in that** the propulsion unit (2) comprises an electric motor rotating a propeller (14).

4. An apparatus according to claim 3, **characterized in that** the propulsion unit (2) comprises a lower part (35) of steering module and an upper part (18) of the steering module is installable inside the hull.

5. An apparatus according to claim 2, **characterized in that** apparatus comprises a dummy pinion (39) to lock the lower part (35) of the steering module.

6. An apparatus according to claim 1, **characterized in that** the propulsion unit comprises a vertical shaft rotated by motor above it and a first bevel gear and horizontal shaft locating in the lower part of the propulsion unit.

7. An apparatus according to claim 1, **characterized in that** the propulsion unit comprises a vertical shaft rotated by a second bevel gear above it and a first bevel gear and horizontal shaft locating in the lower part of the propulsion unit.

8. An apparatus according to claim 7, **characterized in that** it comprises an equipment to connect the transmission element to attach a vertical shaft of the propulsion unit to a vertical shaft above the propulsion unit.

9. An apparatus according to claim 1, **characterized in that** the first opening (24) is in the midpoint of the frame plate (18).

10. A method for installing a propulsion unit to a hull of a ship, wherein the propulsion unit comprises an upper part of the propulsion unit attachable to the hull of the ship and a lower part of the propulsion unit where to a propeller shaft is rotatably supported, and the upper part of the propulsion unit having a flange plate to be attached tightly to the hull, and wherein there is an aperture (16) in bottom of hull (6) where to the propulsion unit (2) is to be installed, **characterized in that** the method comprises a step of attaching a frame plate (18) with openings (24,28) to the hull to cover the aperture (16) in the hull, steps of installing a plurality of water-tight covers (32,34) covering openings (24,28) in the frame plate (18) and of installing a plurality of watertight covers (50,52) covering openings (46,48) in the flange plate on the top of the upper part of the propulsion unit, wherein at least one removable hull-side cover (32,34) covering at least one opening (24,28) in the frame plate (18) is faced to at least one removable propulsion unit side cover (50,52) covering the openings (46,48) in the flange plate, and wherein the covers covering the openings in the flange plate are received in the openings of the frame plate during installation of the propulsion unit to the ship and wherein the removable covers (32,34,50,52) are bolted from the hull-side.

11. A method according to claim 10, **characterized in that** the method comprises steps
- The frame plate (18) is attached to the hull covering the aperture,
- A first cover (32) is attached to the frame plate covering a first opening (24) therein,
- second covers (34) are attached to the frame plate covering second openings (28) therein,
- A flange plate (40) is attached to the top of upper part (4) of the propulsion unit (2),
- A third cover (50) is attached to the flange plate (40) covering a third opening (46) therein,
- fourth covers (52) are attached to the flange plate (40) covering fourth openings (48) therein,
- Transporting and lifting the propulsion unit (2) to close the hull (6);
- Fixing the propulsion unit to the hull,
- Removing the first cover (32) and the second covers (34),
- Removing the third cover ((50) and the fourth covers (52,
- Installing a steering motor and gear (30),
- Connecting a slip ring unit and a torque tube.

12. A method according to claim 11, **characterized in that** the method comprises step of transporting the removed covers (32,34,50,52) to a space (80) inside the hull.

## Patentansprüche

1. Vorrichtung zum Einbau eines Triebwerks (2) im Rumpf (6) eines Schiffs, einen Rumpf eines Schiffs und ein Triebwerk umfassend, wobei das Triebwerk einen oberen Teil (4), der am Rumpf (6) des Schiffs anbringbar ist, und einen unteren Teil (12), an dem eine Schrauben(14)-welle drehbar gelagert wird, umfasst, und wobei der obere Teil (4) des Triebwerks eine Flanschplatte (40) aufweist, die an der Oberseite des oberen Teils des Triebwerks angebracht ist, um das Triebwerk fest am Rumpf (6) anzubringen, wobei die Flanschplatte mehrere Öffnungen umfasst und wobei das Triebwerk (2) an einer Öffnung (16) im Boden des Rumpfs montierbar ist, **dadurch gekennzeichnet, dass** die Vorrichtung eine Rahmenplatte (18) mit Öffnungen (24, 28), die am Rumpf anbringbar ist, um die Öffnung (16) im Rumpf abzudecken, mehrere abnehmbare und wasserdichte erste und zweite Abdeckungen (32, 34), die erste und zweite Öffnungen (24, 28) darunter in der Rahmenplatte (18) abdecken, und mehrere abnehmbare und wasserdichte dritte und vierte Abdeckungen (50, 52), die dritte und vierte Öffnungen darunter in der Flanschplatte in der Oberseite des oberen Teils des Triebwerks (2) abdecken, umfasst, wobei die dritte und vierte abnehmbare Abdeckung den Öffnungen (24) in der Rahmenplatte (18) zugewandt sind und von diesen beim Einbau des Triebwerks aufnehmbar sind und wobei die abnehmbaren Abdeckungen von der Rumpfseite verschraubbar sind.

2. Vorrichtung nach Anspruch 1, **dadurch gekennzeichnet, dass** die erste Abdeckung (32), die zweiten Abdeckungen (34), die dritte Abdeckung (50) und die vierten Abdeckungen (52) abnehmbar und in einen Raum (80) innerhalb des Rumpfs transportierbar sind.

3. Vorrichtung nach Anspruch 1 oder 2, **dadurch gekennzeichnet, dass** das Triebwerk (2) einen Elektromotor umfasst, der eine Schraube (14) dreht.

4. Vorrichtung nach Anspruch 3, **dadurch gekennzeichnet, dass** das Triebwerk (2) einen unteren Teil (35) des Lenkmoduls umfasst und ein oberer Teil (18) des Lenkmoduls im Rumpf montierbar ist.

5. Vorrichtung nach Anspruch 2, **dadurch gekennzeichnet, dass** die Vorrichtung ein Ausgleichsritzel (39) umfasst, um den unteren Teil (35) des Lenkmoduls zu sperren.

6. Vorrichtung nach Anspruch 1, **dadurch gekennzeichnet, dass** das Triebwerk eine vertikale Welle, die von dem Motor darüber gedreht wird, und ein erstes Kegelrad und eine horizontale Welle, die sich im unteren Teil des Triebwerks befinden, umfasst.

7. Vorrichtung nach Anspruch 1, **dadurch gekennzeichnet, dass** das Triebwerk eine vertikale Welle, die von einem zweiten Kegelrad darüber gedreht wird, und ein erstes Kegelrad und eine horizontale Welle, die sich im unteren Teil des Triebwerks befinden, umfasst.

8. Vorrichtung nach Anspruch 7, **dadurch gekennzeichnet, dass** sie eine Einrichtung umfasst, um das Getriebeelement anzuschließen, um eine vertikale Welle des Triebwerks an einer vertikalen Welle über dem Triebwerk anzubringen.

9. Vorrichtung nach Anspruch 1, **dadurch gekennzeichnet, dass** die erste Öffnung (24) in der Mitte der Rahmenplatte (18) angeordnet ist.

10. Verfahren für den Einbau eines Triebwerks im Rumpf eines Schiffs, wobei das Triebwerk einen oberen Teil des Triebwerks, der am Rumpf des Schiffs anbringbar ist, und einen unteren Teil des Triebwerks, an dem eine Schraubenwelle drehbar gelagert wird, umfasst und wobei der obere Teil des Triebwerks eine Flanschplatte aufweist, die fest am Rumpf anzubringen ist, und wobei im Boden des Rumpfs (6) eine Öffnung (16) vorhanden ist, in der das Triebwerk (2) einzubauen ist, **dadurch gekennzeichnet, dass** das Verfahren einen Schritt zum Anbringen einer Rahmenplatte (18) mit Öffnungen (24, 28) am Rumpf, um die Öffnung (16) im Rumpf abzudecken, Schritte zum Einbau mehrerer wasserdichter Abdeckungen (32, 34), die Öffnungen (24, 28) in der Rahmenplatte (18) abdecken, und zum Einbau mehrerer wasserdichter Abdeckungen (50, 52), die Öffnungen (46, 48) in der Flanschplatte auf der Oberseite des oberen Teils des Triebwerks abdecken, umfasst, wobei mindestens eine abnehmbare, rumpfseitige Abdeckung (32, 34), die mindestens eine Öffnung (24, 28) in der Rahmenplatte (18) bedeckt, mindestens einer abnehmbaren, triebwerkseitigen Abdeckung (50, 52), die die Öffnungen (46, 48) in der Flanschplatte abdeckt, zugewandt ist, und wobei die Abdeckungen, die die Öffnungen in der Flanschplatte abdecken, beim Einbau des Triebwerks im Schiff in den Öffnungen der Rahmenplatte aufgenommen werden und wobei die abnehmbaren Abdeckungen (32, 34, 50, 52) rumpfseitig verschraubt sind.

11. Verfahren nach Anspruch 10, **dadurch gekennzeichnet, dass** das Verfahren folgende Schritte umfasst:
- die Rahmenplatte (18) wird am Rumpf angebracht und bedeckt die Öffnung,
- eine erste Abdeckung (32) wird an der Rahmenplatte angebracht und deckt eine erste Öffnung (24) darin ab,
- zweite Abdeckungen (34) werden an der Rahmenplatte angebracht und decken zweite Öffnungen (28) darin ab,
- eine Flanschplatte (40) wird an der Oberseite des oberen Teils (4) des Triebwerks (2) angebracht,
- eine dritte Abdeckung (50) wird an der Flanschplatte (40) angebracht und deckt eine dritte Öffnung (46) darin ab,
- vierte Abdeckungen (52) werden an der Flanschplatte (40) angebracht und decken vierte Öffnungen (48) darin ab,
- Transportieren und Anheben des Triebwerks (2), um den Rumpf (6) zu schließen;
- Fixieren des Triebwerks am Rumpf,
- Abnehmen der ersten Abdeckung (32) und der zweiten Abdeckungen (34),
- Abnehmen der dritten Abdeckung (50) und der vierten Abdeckungen (52),
- Einbauen eines Lenkmotors und Zahnrads (30),
- Verbinden eines Schleifrings und eines Schubrohrs.

12. Verfahren nach Anspruch 11, **dadurch gekennzeichnet, dass** das Verfahren den Schritt des Transportierens der abgenommenen Abdeckungen (32, 34, 50, 52) in einen Raum (80) innerhalb des Rumpfs umfasst.

## Revendications

1. Appareil pour installer une unité de propulsion (2) sur une coque (6) d'un navire, comprenant une coque d'un navire, et une unité de propulsion, l'unité de propulsion comprenant une partie supérieure (4) pouvant être fixée à la coque (6) du navire et une partie inférieure (12) sur laquelle un arbre d'hélice (14) est supporté de manière rotative, et la partie supérieure (4) de l'unité de propulsion ayant une plaque de bride (40) fixée sur le dessus de la partie supérieure de l'unité de propulsion pour fixer l'unité de propulsion fermement à la coque (6), la plaque de bride comprenant une pluralité d'ouvertures, et l'unité de propulsion (2) pouvant être installée sur une ouverture (16) dans le fond de la coque, **caractérisé en ce que** l'appareil comprend une plaque de cadre (18) avec des ouvertures (24, 28) pouvant être fixée à la coque pour couvrir l'ouverture (16) dans la coque, une pluralité de premier et deuxièmes couvercles (32, 34) amovibles et étanches à l'eau couvrant les premières et deuxièmes ouvertures (24, 28) situées dessous dans la plaque de cadre (18) et une pluralité de troisième et quatrièmes couvercles (50, 52) amovibles et étanches à l'eau couvrant les troisième et quatrième ouvertures situées dessous dans la plaque de bride dans le dessus de la partie supérieure de l'unité de propulsion (2), les troisième et quatrièmes couvercles amovibles faisant face et pouvant être reçus par les ouvertures (24) dans la plaque de cadre (18) pendant l'installation de l'unité de propulsion, et les couvercles amovibles peuvent être boulonnés à partir du côté coque.

2. Appareil selon la revendication 1, **caractérisé en ce que** le premier couvercle (32), les deuxièmes couvercles (34), le troisième couvercle (50) et les quatrièmes couvercles (52) sont amovibles et transportables vers un espace (80) à l'intérieur de la coque.

3. Appareil selon la revendication 1 ou 2, **caractérisé en ce que** l'unité de propulsion (2) comprend un moteur électrique faisant tourner une hélice (14).

4. Appareil selon la revendication 3, **caractérisé en ce que** l'unité de propulsion (2) comprend une partie inférieure (35) de module de direction et une partie supérieure (18) du module de direction peut être installée à l'intérieur de la coque.

5. Appareil selon la revendication 2, **caractérisé en ce que** l'appareil comprend un pignon (39) factice pour verrouiller la partie inférieure (35) du module de direction.

6. Appareil selon la revendication 1, **caractérisé en ce que** l'unité de propulsion comprend un arbre vertical entraîné en rotation par un moteur situé au-dessus d'elle et un premier engrenage conique et un arbre horizontal se trouvant dans la partie inférieure de l'unité de propulsion.

7. Appareil selon la revendication 1, **caractérisé en ce que** l'unité de propulsion comprend un arbre vertical entraîné en rotation par un second engrenage conique situé au-dessus d'elle et un premier engrenage conique et un arbre horizontal se trouvant dans la partie inférieure de l'unité de propulsion.

8. Appareil selon la revendication 7, **caractérisé en ce qu'**il comprend un équipement pour relier l'élément de transmission afin de fixer un arbre vertical de l'unité de propulsion à un arbre vertical au-dessus de l'unité de propulsion.

9. Appareil selon la revendication 1, **caractérisé en ce que** la première ouverture (24) se trouve au milieu de la plaque de cadre (18).

10. Procédé d'installation d'une unité de propulsion sur la coque d'un navire, l'unité de propulsion comprenant une partie supérieure de l'unité de propulsion pouvant être fixée à la coque du navire et une partie inférieure de l'unité de propulsion sur laquelle un arbre d'hélice est supporté de manière rotative, et la partie supérieure de l'unité de propulsion ayant une plaque de bride à fixer fermement à la coque, et une ouverture (16) se trouvant dans le fond de la coque (6) où l'unité de propulsion (2) doit être installée, **caractérisé en ce que** le procédé comprend une étape consistant à fixer une plaque de cadre (18) avec des ouvertures (24, 28) sur la coque pour couvrir l'ouverture (16) dans la coque, des étapes consistant à installer une pluralité de couvercles (32, 34) étanches couvrant des ouvertures (24, 28) dans la plaque de cadre (18) et à installer une pluralité de couvercles (50, 52) étanches couvrant des ouvertures (46, 48) dans la plaque de bride sur le dessus de la partie supérieure de l'unité de propulsion, au moins un couvercle (32, 34) amovible côté coque couvrant au moins une ouverture (24, 28) dans la plaque de cadre (18) faisant face à au moins un couvercle (50, 52) amovible côté unité de propulsion couvrant les ouvertures (46, 48) dans la plaque de bride, et les couvercles couvrant les ouvertures dans la plaque de bride étant reçus dans les ouvertures de la plaque de cadre pendant l'installation de l'unité de propulsion sur le navire et les couvercles (32, 34, 50, 52) amovibles étant boulonnés à partir du côté coque.

11. Procédé selon la revendication 10, **caractérisé en ce que** le procédé comprend en outre les étapes suivantes la plaque de cadre (18) est fixée à la coque et couvre l'ouverture,
un premier couvercle (32) est fixé à la plaque de cadre couvrant une première ouverture (24) en son sein,
des deuxièmes couvercles (34) sont fixés à la plaque de cadre couvrant les deuxièmes ouvertures (28) en son sein, une plaque de bride (40) est fixée sur le dessus de la partie supérieure (4) de l'unité de propulsion (2),
un troisième couvercle (50) est fixé à la plaque de bride (40) couvrant une troisième ouverture (46) en son sein, des quatrièmes couvercles (52) sont fixés à la plaque de bride (40) couvrant les quatrièmes ouvertures (48) en son sein,
transport et levage de l'unité de propulsion (2) près de la coque (6) ;
fixation de l'unité de propulsion sur la coque,
retrait du premier couvercle (32) et des deuxièmes couvercles (34),
retrait du troisième couvercle (50) et des quatrièmes couvercles (52),
installation d'un moteur et d'un engrenage de direction (30) ,
raccordement d'une unité de bague collectrice et d'un tube de torsion.

12. Procédé selon la revendication 11, **caractérisé en ce que** le procédé comprend l'étape consistant à transporter les couvercles (32, 34, 50, 52) retirés vers un espace (80) à l'intérieur de la coque.
